(19) **Europäisches Patentamt**
**European Patent Office**
**Office européen des brevets**

(11) **EP 2 040 254 A2**

(12) # EUROPEAN PATENT APPLICATION

(43) Date of publication:
   **25.03.2009 Bulletin 2009/13**

(51) Int Cl.:
   **G11B 5/31** *(2006.01)*   **G11B 5/02** *(2006.01)*

(21) Application number: **08164630.9**

(22) Date of filing: **18.09.2008**

(84) Designated Contracting States:
   **AT BE BG CH CY CZ DE DK EE ES FI FR GB GR HR HU IE IS IT LI LT LU LV MC MT NL NO PL PT RO SE SI SK TR**
   Designated Extension States:
   **AL BA MK RS**

(30) Priority: **21.09.2007 JP 2007246245**

(71) Applicant: **Sony Corporation**
   **Tokyo 108-0075 (JP)**

(72) Inventor: **Kojima, Naoto**
   **TOKYO 108-0075 (JP)**

(74) Representative: **Körber, Martin Hans**
   **Mitscherlich & Partner**
   **Sonnenstraße 33**
   **80331 München (DE)**

(54) **Light-assisted magnetic head apparatus, light-assisted magnetic recording apparatus, and light-assisted magnetic recording method**

(57)   A light-assisted magnetic head apparatus is provided. The light-assisted magnetic head apparatus includes a focusing optical system and a thin magnetic head having a main magnetic pole. The focusing optical system includes a hemispherical or hyper-hemispherical solid immersion lens. The thin-film magnetic head includes a metal layer that causes surface plasmon resonance on a light-incident side of the main magnetic pole.

*FIG. 1*

EP 2 040 254 A2

**Description**

CROSS REFERENCES TO RELATED APPLICATIONS

The present invention contains subject matter related to Japanese Patent Application JP 2007-246245 filed in the Japanese Patent Office on September 21, 2007, the entire contents of which being incorporated herein by reference.

BACKGROUND OF THE INVENTION

Field of the Invention:

The present invention relates to a light-assisted magnetic head apparatus, a light-assisted magnetic recording apparatus, and a light-assisted magnetic recording method that carry out magnetic recording by locally irradiating recording regions with light.

Description of the Related Art:

There is increasingly high demand for high-density recording on an information recording medium. There is also demand for super-high density recording of information on magnetic recording media, such as magnetic tapes and magnetic disks. Perpendicular recording is carried out in such recording to miniaturize the recorded bits, and development is proceeding into the realization of a higher resolution and increased coercivity for a magnetic layer.
Although magnetic materials with high coercivity have been developed, when recording is carried out on a magnetic recording medium formed of a material with high coercivity, it is difficult to sufficiently increase the signal recording magnetic field. Thus, a light-assisted magnetic head apparatus has been proposed. Such light-assisted magnetic head apparatus locally increases the temperature of recording positions on a magnetic recording medium irradiated with light, which temporarily lowers the coercivity of the recording regions and enables information to be magnetically recorded. By doing so, it is possible to record information using minute magnetic field spots on a magnetic recording medium that has a high-coercivity magnetic layer.
During light-assisted magnetic recording, it may be necessary to miniaturize the light spot for high-density recording, that is, the formation of minute recording bits. With a typical focusing lens, the spot diameter is determined by the wavelength of the light used and the numerical aperture (NA) of the lens, but due to the limitations on the numerical aperture (NA), a limit may have been reached for the miniaturization of the spot diameter.
On the other hand, research has been carried out into a technology that raises the numerical aperture of an objective lens by interposing a hemispherical or hyper-hemispherical solid immersion lens (hereinafter simply "SIL") between the objective lens and a recording medium. When a spot is formed by near-field light using a hemispherical or hyper-hemispherical SIL, the spot diameter is miniaturized. If the refraction index of the SIL for the wavelength of the light in use is expressed as n, it is possible to raise the effective numerical aperture by n times when a hemispherical SIL is used or by $n^2$ when a hyper-hemispherical SIL (also referred to as a "hyper SIL") or in other words to reduce the spot size to $1/n$ or $1/n^2$.
Focusing on the miniaturization of the spot, a light-assisted magnetic head that uses a hemispherical or hyper-hemispherical SIL has also been proposed (see for example, Japanese Unexamined Patent Application Publication No. 2006-286119).
The light-assisted magnetic head disclosed in Japanese Unexamined Patent Application Publication No. 2006-286119 includes a two-group focusing lens system including an objective lens and a hemispherical or hyper-hemispherical SIL, and in particular the SIL is formed by joining together a spherical lens and a light transmitting substrate. A thin-film magnetic head is formed on the light transmitting substrate to form the light-assisted magnetic head.

SUMMARY OF THE INVENTION

In the light-assisted magnetic head apparatus described above, when the light spot is miniaturized, the magnetic pole that generates the recording magnetic field and the light spot that heats the surface of the magnetic recording medium may need to be closely spaced to the order of 10 nm or so, or in other words, at under 100 nm.
For existing light-assisted magnetic heads, the focus of research has been on methods that form a light spot using an optical waveguide, but to obtain a sufficient light transmission efficiency as a waveguide, it may be necessary to produce a clad layer with a thickness that is a fraction of the wavelength, or in other words, around 100 nm or above. This means that it is difficult to dispose the light spot close to the magnetic pole by that distance or less.
On the other hand, with the light-assisted magnetic head that uses a hemispherical or hyper-hemispherical SIL disclosed in Japanese Unexamined Patent Application Publication No. 2006-286119 mentioned above, it is possible to closely dispose the magnetic pole and the light spot. There is a further advantage in that when light is three-dimensionally propagated using a lens, the usage efficiency of the light is high.

However, when the light spot is disposed close to the magnetic pole, the light may be blocked by the magnetic pole. For this reason, research is being carried out into a method that can generate a sufficient recording magnetic field on the surface of the magnetic recording medium and also emit light of a sufficiently high intensity.

The present applicant has proposed in Japanese Patent Application No. 2007-227170 a light-assisted magnetic head apparatus that controls the direction of polarization of the emitted light (the direction of photoelectric field oscillations) and uses surface plasmons of a main magnetic pole formed of a magnetic material to locally form a spot at an end of the main magnetic pole. When a spot is locally formed using surface plasmons of the main magnetic pole as described above, a sufficient light-assist effect may not be obtained depending on the material of the main magnetic pole.

It is desirable to secure a sufficient light intensity for light-assisted magnetic recording and to miniaturize the spot diameter when forming a local spot using surface plasmons of a main magnetic pole of a thin-film magnetic head.

According to an embodiment of the present invention, there is provided a light-assisted magnetic head apparatus including a focusing optical system and a thin-film magnetic head having a main magnetic pole. The focusing optical system includes a hemispherical or hyper-hemispherical solid immersion lens. The thin-film magnetic head includes a metal layer that causes surface plasmon resonance on a light-incident side of the main magnetic pole.

It is desirable that in the light-assisted magnetic head apparatus according to an embodiment of the present invention, light incident on the focusing optical system preferably be linearly polarized light and a direction of electric field oscillations of the incident light preferably be disposed along a direction of relative movement between the light-assisted magnetic head apparatus and a magnetic recording medium.

According to another embodiment of the present invention, there is provided a light-assisted magnetic recording apparatus including: a light source unit; a magnetic recording medium mounting unit; a thin-film magnetic head having a main magnetic pole; a recording signal control unit; and a focusing optical system that guides light from the light source unit to the thin-film magnetic head. The focusing optical system includes a hemispherical or hyper-hemispherical solid immersion lens. The thin-film magnetic head includes a metal layer that causes surface plasmon resonance on a light-incident side of the main magnetic pole.

According to further embodiment of the present invention, there is provided a light-assisted magnetic recording method including the steps of:

disposing a thin-film magnetic head at a focused spot position of a focusing optical system;
providing a metal layer that causes surface plasmon resonance on a main magnetic pole of the thin-film magnetic head; and
carrying out recording on a magnetic recording medium by applying near field light from a front end position where the metal layer of the main magnetic pole is provided.

As described above, a metal layer formed of a material that causes surface plasmon resonance is provided on a main magnetic pole of a thin-film magnetic head in the light-assisted magnetic head apparatus, the light-assisted magnetic recording apparatus, and the light-assisted magnetic recording method according to an embodiment of the present invention.

As described above, when a minute spot is formed on a magnetic recording medium by near field light to carry out light-assisted magnetic recording, it is possible to produce surface plasmons by appropriately selecting the positional relationship between the main magnetic pole and the incident light produced by the focusing optical system, the polarization direction of the incident light, and the like, and by doing so the spot diameter can be reduced and the light intensity can be improved. However, a result of thorough research by the present inventor shows a sufficient light intensity may not be obtained depending on the material of the main magnetic pole.

Reasons may be as follows.

[1] Although Co, Ni are representative examples of the main component of a magnetic material used as the material of the main magnetic pole, the dielectric function $\varepsilon(\omega)$ of such material may not become negative in the range of visible light normally used in a light-assisted magnetic head apparatus, and therefore surface plasmon resonance may not occur or hardly occurs.
[2] The diameter of a spot formed at an end of the main magnetic pole is limited to substantially the thickness of the main magnetic pole.

That is, due to reason [1] above, it is difficult to expect a large increase in the electric field strength by surface plasmon resonance, and due to reason [2] above, the diameter of the formed spot is determined by the thickness of the main magnetic pole. Accordingly, if the main magnetic pole is formed of a material such as Co or Ni to obtain a suitable magnetic field strength for the recording characteristics and the main magnetic pole is formed with a suitable thickness for the recording characteristics, limitations may be imposed on the miniaturization of the spot diameter.

According to an embodiment of the present invention, a metal layer that causes surface plasmon resonance for visible light is provided on an end surface on a side, where light from a focusing optical system is incident, of a main magnetic pole of a thin-film magnetic head. Therefore, a spot with a desired light intensity can be formed approximately the center of the recording magnetic field, and it is possible to miniaturize the spot diameter by appropriately selecting the thickness of the metal layer. That is, according to an embodiment of the present invention, it is possible to simultaneously miniaturize the spot diameter and dispose the magnetic pole and light spot close to each other.

According to an embodiment of the present invention, when forming a local spot using surface plasmons of a main magnetic pole of a thin-film magnetic head, a sufficient light intensity is obtained for light-assisted magnetic recording and the spot diameter is miniaturized.

BRIEF DESCRIPTION OF THE DRAWINGS

FIG. 1 is a schematic cross-sectional view of a light-assisted magnetic head apparatus according to an embodiment of the present invention.
FIG. 2 is a schematic perspective view of a principal part of the light-assisted magnetic head apparatus according to an embodiment of the present invention.
FIG. 3 is a schematic perspective view of the light-assisted magnetic head apparatus according to an embodiment of the present invention in which one part of the head apparatus has been cut away.
FIGS. 4A and 4B are schematic cross-sectional views of a principal part of the light-assisted magnetic head apparatus according to an embodiment of the present invention.
FIGS. 5A and 5B are a schematic cross-sectional view and a schematic plan view of a principal part of the light-assisted magnetic head apparatus according to an embodiment of the present invention.
FIG. 6 is a schematic diagram of the light-assisted magnetic head apparatus according to an embodiment of the present invention.
FIG. 7 is a schematic diagram of the light-assisted magnetic head apparatus according to an embodiment of the present invention.
FIG. 8 is a schematic diagram of the light-assisted magnetic head apparatus according to an embodiment of the present invention.
FIG. 9 is a diagram showing an incident photoelectric field and a light spot near a main magnetic pole of a light-assisted magnetic head apparatus according to a comparative example.
FIG. 10 is a diagram used for explaining an incident photoelectric field and a light spot near a main magnetic pole of the light-assisted magnetic head apparatus according to an embodiment of the present invention.
FIG. 11 is a graph showing respective spot intensity distributions near a main magnetic pole of light-assisted magnetic head apparatuses according to an embodiment of the present invention, a comparative example, and an existing example.

DESCRIPTION OF THE PREFERRED EMBODIMENTS

Preferred embodiments of the present invention will now be described; however, the present invention is not limited to the embodiments described below.

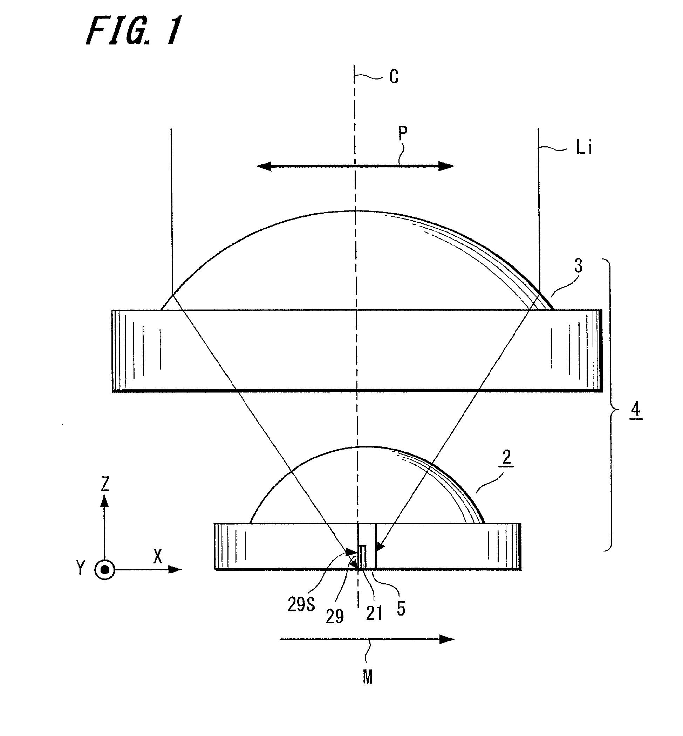

FIG. 1 is a schematic cross-sectional view of a light-assisted magnetic head apparatus according to one embodiment of the present invention. As shown in FIG. 1, the light-assisted magnetic head apparatus according to the present embodiment includes a focusing optical system 4 and a thin-film magnetic head 5. The focusing optical system 4 includes an objective lens 3 and a hemispherical or hyper-hemispherical SIL 2. A main magnetic pole 21 of the thin-film magnetic head 5 includes a metal layer 29 that causes surface plasmon resonance on a side (hereinafter simply "light-incident side") of the main magnetic pole 21 where incident light Li from the focusing optical system 4 is incident. Also, a surface 29S of the metal layer 29, that is, a side surface on the side where light is incident and which is at a leading end of the main magnetic pole 21 in the direction of relative movement between a magnetic recording medium (not shown) and the light-assisted magnetic head apparatus, is disposed along an optical axis C of the focusing optical system 4. In FIG. 1, the arrow M shows the movement direction of the magnetic recording medium. That is, the surface 29S of the metal layer 29 that is the side surface on the light-incident side of the main magnetic pole 21 is at the rear end-side of the arrow M in FIG. 1 (that is, the left side in the plane of FIG. 1).

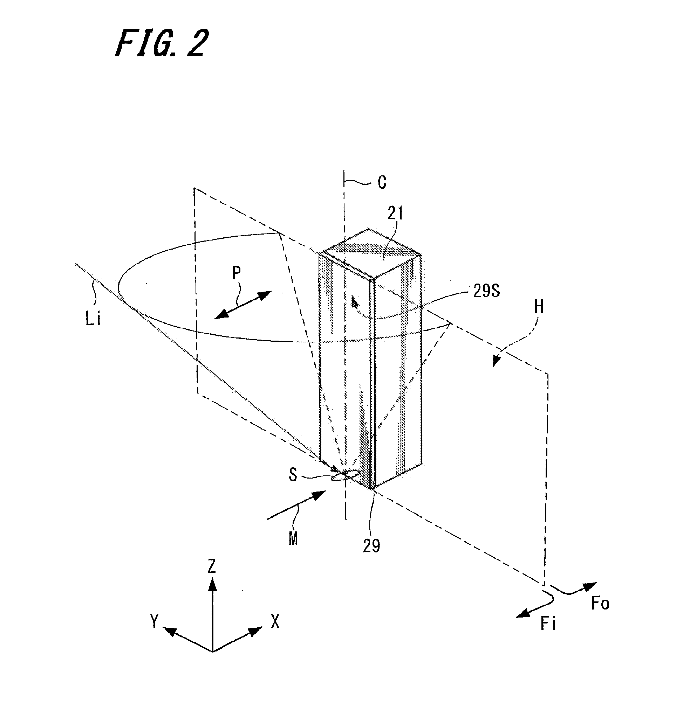

As shown in the schematic perspective view of the main magnetic pole 21 in FIG. 2, the metal layer 29 is provided on the light-incident side of the main magnetic pole 21 and the optical axis C is disposed in the center of the surface 29S of the metal layer 29. In FIG. 2, parts that correspond to parts in FIG. 1 have been assigned the same reference numerals and duplicated description thereof is omitted.

In FIGS. 1 and 2, a direction parallel to the movement direction of the magnetic recording medium is designated as the X axis, a direction along the optical axis is designated as the Z axis, and a direction perpendicular to such axes is designated as the Y axis. That is, the X direction is the direction of relative movement between the magnetic head and the magnetic recording medium, or in other words, the length direction of the recording tracks, the Y direction is the width direction of the recording tracks on the magnetic recording medium, and the Z direction is the gap direction for the SIL. The optical axis C is preferably disposed in the center of the width in the Y direction of the surface 29S of the metal layer 29 provided on the side surface of the main magnetic pole 21 where light is incident.

As shown in FIGS. 1 and 2, in the light-assisted magnetic head apparatus according to the present embodiment, light Li focused by the focusing optical system 4 onto the surface 29S of the metal layer 29 provided on the incident side of the main magnetic pole 21 is linearly-polarized light. In addition, as shown by the arrow P, the direction of electric field oscillations is set along the direction of relative movement between the magnetic head and the magnetic recording medium (as shown by the arrow M). That is, in this case, the focusing optical system 4 and the thin-film magnetic head 5 are disposed so that the direction of electric field oscillations of the incident light Li is parallel with the length direction of the recording tracks of the magnetic recording medium.

As shown in FIG. 2, the plane H shown by the dot-dot-dash line virtually shows the same plane as the surface 29S of the metal layer 29 provided on the main magnetic pole 21. The region shown by the arrow Fi (i.e., the opposite side of the plane H to the main magnetic pole 21) is the side where light is incident, that is, the leading end side in the direction of relative movement between the magnetic head and the magnetic recording medium. The region shown by the arrow Fo (the main magnetic pole 21 side of the plane H) is the trailing end side. Also, the spot S produced by the light Li focused by the focusing optical system 4 is schematically shown in FIG. 2.

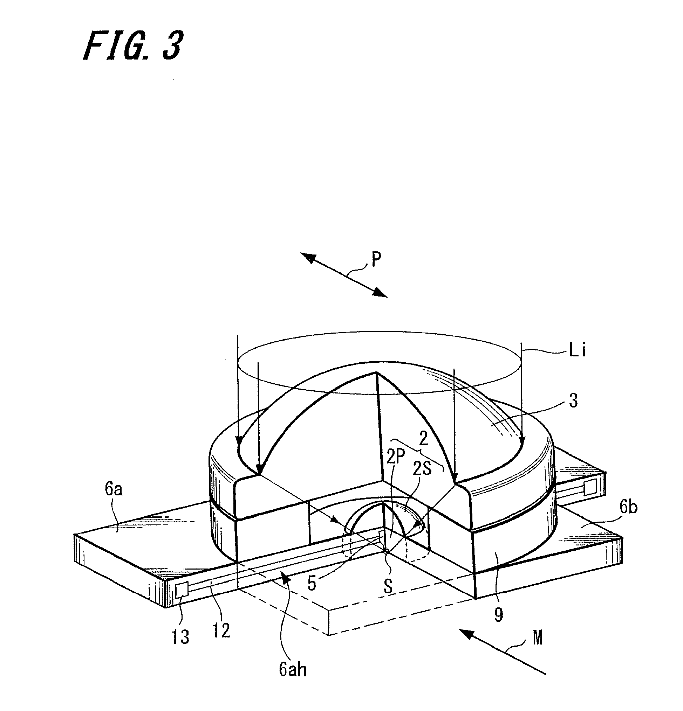

FIG. 3 is a schematic perspective view showing a more specific example of the construction of the focusing optical system 4 in the light-assisted magnetic head apparatus shown in FIGS. 1 and 2. As shown in FIG. 3, parts that correspond to those in FIG. 1 have been assigned the same reference numerals and duplicated description thereof is omitted. In this example, as described earlier, the focusing optical system 4 includes the objective lens 3 and the hemispherical or hyper-hemispherical SIL 2 used in near-field light recording. With the objective lens 3 and the SIL 2, it is possible to obtain an optical system that realizes a numerical aperture with an effective aperture ratio exceeding 1.0 and produces near-field light.

With a single objective lens, due to the diffraction limit of light, the diameter of the focused spot can only be reduced to around $\lambda/NAobj$. Here, $\lambda$ is the wavelength of the used light and NAobj is the numerical aperture of the objective lens. On the other hand, in the focusing optical system 4 that uses the hemispherical or hyper-hemispherical SIL 2 as described earlier, the spot diameter can be miniaturized to $1/n$ with a hemispherical SIL or to $1/n^2$ with a hyper-hemispherical SIL on the base surface (the focal plane) of the SIL 2. Here, n is the refractive index of the SIL 2 at the wavelength $\lambda$ of the light in use. Typically, the gap between the base surface of the SIL 2 and the magnetic recording medium is reduced to $\lambda/10$ or below, thereby due to the imaging effect of near-field light further miniaturizing the spot diameter of $\lambda/NAobj$ to $1/n$ with a hemispherical SIL or to $1/n^2$ with a hyper-hemispherical SIL at the surface of a magnetic recording medium.

As shown in FIG. 3, the SIL 2 in this example is formed by joining first and second optical blocks 6a and 6b in the form of flat plates and a spherical portion 2S. The first and second optical blocks 6a and 6b and the spherical portion 2S are formed of optical members that transmit light of the wavelength used and have a high refractive index, and are preferably formed of the same material.

In FIG. 3, part of the second optical block 6b is cut away to show the thin-film magnetic head 5 formed on the first optical block 6a. Note that the sizes and forms of the first and second optical blocks 6a and 6b are not limited to the example shown in FIG. 3 and it is possible to use various other forms.

An example of a method of manufacturing the SIL 2 will now be described. For example, one end surface of the first optical block 6a is set as a head formation surface 6ah and the thin-film magnetic head 5, where as described earlier a metal layer that causes surface plasmon resonance is disposed on the main magnetic pole 21, is formed on the head formation surface 6ah. Subsequently, the first optical block 6a and the second optical block 6b are bonded together using an optical adhesive or joined by welding. As the optical adhesive, it is preferable to use a high refractive index material with a refractive index of 1.5 or above, for example, and even more preferably a similar refractive index to the first and second optical blocks 6a and 6b.

The surface of the joined first and second optical blocks 6a and 6b on which the main magnetic pole 21 of the thin-film magnetic head 5 will be formed is subjected to surface grinding, or in other words depth grinding that adjusts the depth of the main magnetic pole 21 is carried out and surface grinding is also carried out on the rear surface to obtain a predetermined thickness. On the other hand, a separate ball lens is provided and part of such ball lens is ground flat to form a spherical portion 2S that has a flat surface substantially perpendicular to the optical axis. As described earlier, the spherical portion 2S may preferably be formed of the same material as the first and second optical blocks 6a and 6b. The flat surface of the spherical portion 2S is joined by bonding with the optical adhesive described above, welding, or the like onto the joined surface of the first and second optical blocks 6a and 6b. When doing so, joining is carried out so that the metal layer on the main magnetic pole 21 of the thin-film magnetic head 5 formed on the first optical block 6a and the optical axis in the spherical portion 2S are disposed as described above with reference to FIG. 2.

The SIL 2 shown in FIG. 3 is obtained using the above-described manufacturing method. The hemispherical or hyper-hemispherical SIL 2 is formed of the spherical portion 2S and a spherical portion 2P that is included as part of the first and second optical blocks 6a and 6b as shown by the dotted line in FIG. 3. Here, the thickness of the first and second optical blocks 6a and 6b and the thickness of the spherical portion 2S are selected so that the overall shape is hemispherical or hyper-hemispherical. If the radius of the spherical portion 2S is expressed as r, when a hemispherical SIL is used, the overall thickness is r, while when a hyper-hemispherical SIL is used, the overall thickness is r × (1 + 1/n). That is, if the thickness of the first and second optical blocks 6a and 6b after the surface grinding is set as T, the spherical portion 2S is formed to have a thickness obtained by subtracting T from the final thickness of the SIL 2.

The overall thickness of the SIL 2 with such construction is r in the case of a hemispherical SIL and is r x (1 + 1/n) in the case of a hyper-hemispherical SIL, and is the equivalent in optical properties of an existing hemispherical SIL or hyper-hemispherical SIL. Thus, light through the objective lens 3 described above is focused on the base surface of the joined SIL 2, that is, the recording medium-side surface of the first and second optical blocks 6a and 6b, and the SIL 2 having such construction functions as a typical SIL. Optical adjustment is carried out during assembly to position the optical axis center of the focusing optical system 4 on the head formation surface 6ah of the first optical block 6a where the main magnetic pole 21 and the metal layer 29 are formed, and as a result, the center of the light spot is disposed in the center, for example, of the surface 29S of the metal layer 29 on the main magnetic pole 21.

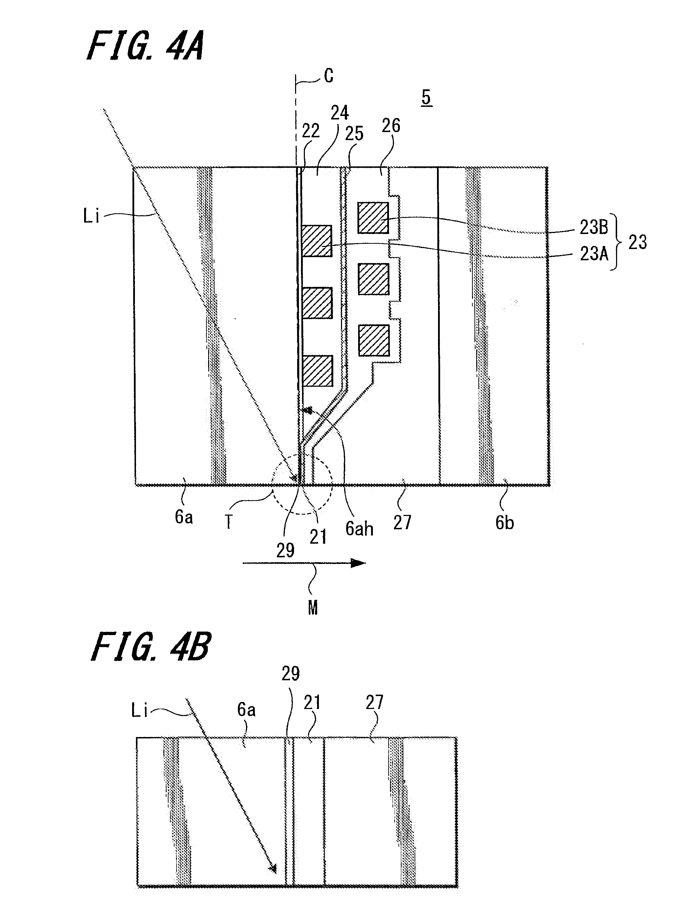

FIG. 4A is an enlarged cross-sectional view of one example of the thin-film magnetic head 5. FIG. 4B is an enlarged cross-sectional view of a front tip portion of the main magnetic pole 21 surrounded by the dotted line T in FIG. 4A. FIG. 4A shows an example of a single-pole magnetic head used for perpendicular recording, where the thin-film magnetic head 5 includes a coiled conductor 23 for generating a magnetic field and the main magnetic pole 21 for leading and applying the generated magnetic field to a recording portion. Although not shown in FIG. 4A, a sub-magnetic pole may be connected to the main magnetic pole 21 to form a magnetic circuit. Note that during actual recording, the thin-film magnetic head 5 is disposed facing a magnetic recording medium that includes a recording layer and a soft magnetic layer, and together with the main magnetic pole 21 and the coiled conductor 23, the soft magnetic layer constitutes a magnetic circuit for the thin-film magnetic head 5.

In the present embodiment, as shown in FIG. 4A, the main magnetic pole 21 is formed with a predetermined length on the head formation surface 6ah of the first optical block 6a. Further, a lower coil layer 23A, an insulating layer 24, a yoke 25 connected to the main magnetic pole 21, an insulating layer 26, and an upper coil layer 23B are formed with an insulating layer 22 in between, and the second optical block 6b is bonded using the optical adhesive 27.

As shown in FIG. 4B, the metal layer 29 that causes surface plasmon resonance is formed on the light-incident side of the main magnetic pole 21 irradiated with the incident light Li.

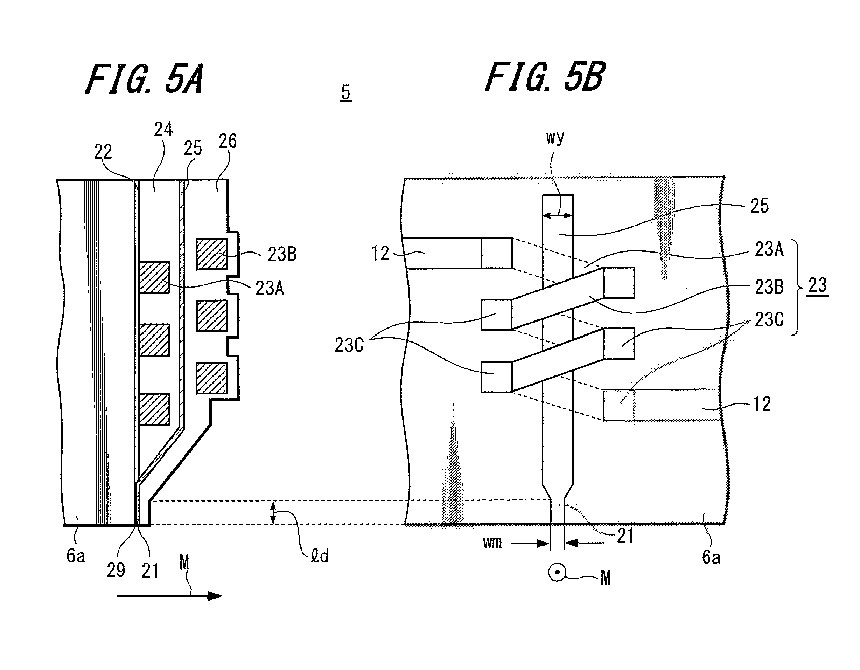

FIGS. 5A and 5B are a schematic cross-sectional view and a plan view of one example of the thin-film magnetic head 5. In FIGS. 5A and 5B, parts that correspond to those in FIG. 4A have been assigned the same reference numerals and duplicated description thereof is omitted. As shown in FIG. 5B, the coiled conductor 23 of the thin-film magnetic head 5 may be formed of a lower coil layer 23A and an upper coil layer 23B arranged in diagonal directions with opposite orientations and a connecting portion 23C that connects the coil layers 23A and 23B. In FIG. 5B, terminal lead portions 12 extend from both ends of the lower coil layer 23A, but it should be appreciated that the number of windings in the coils, the constructions of the various portions, and the forms of the respective coil layers are not limited to this example and can be subjected to various modifications. As shown in FIGS. 5A and 5B, the depth of the main magnetic pole 21 is designated as ld, and the respective widths of the main magnetic pole 21 and the yoke 25 in a direction perpendicular to the direction of relative movement between the thin-film magnetic head 5 and the magnetic recording medium are designated as wm and wy.

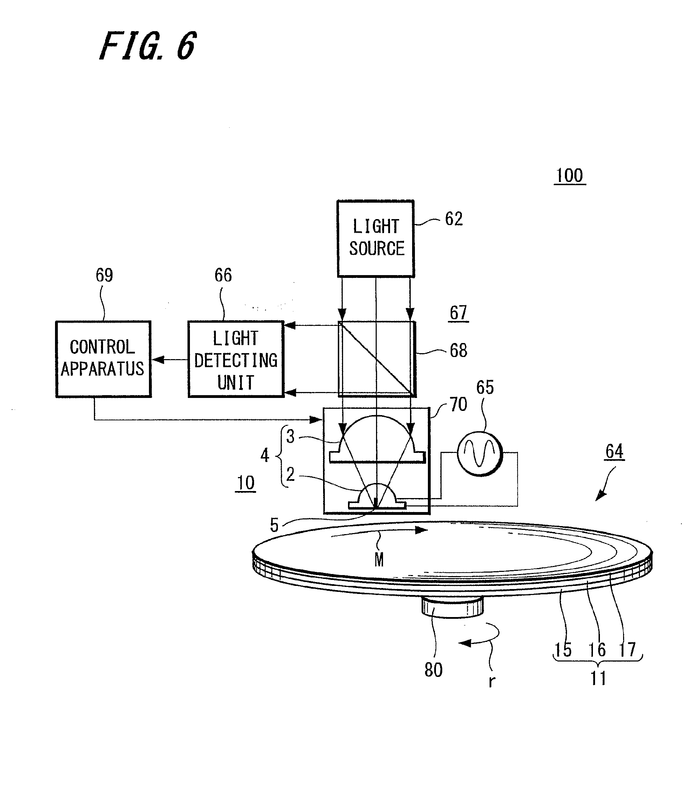

FIG. 6 is a schematic diagram of a light-assisted magnetic recording apparatus according to an embodiment of the present invention.

The magnetic recording apparatus 100 according to the present embodiment includes a light source unit 62, a light-assisted magnetic head apparatus 10 according to an embodiment of the present invention, a mounting portion 64 for mounting a magnetic recording medium 11, a recording signal circuit 65, a light detecting unit 66, and an optical system 67. The light source unit 62 has a semiconductor laser element with a wavelength of 400 nm, for example. The magnetic recording medium 11, for example, a magnetic disk is mounted on the mounting portion 64 and rotationally driven. The recording signal circuit 65 is a recording signal power source unit that supplies a recording signal to a magnetic head coil of the thin-film magnetic head 5 of the light-assisted magnetic head apparatus 10. The light detecting unit 66 includes, for example, a photodiode that detects return light from the magnetic recording medium 11. The optical system 67 guides laser light from the light source unit 62 to the light-assisted magnetic head apparatus 10 and guides return light from the magnetic recording medium 11 to the light detecting unit 66. The magnetic recording medium 11 is formed by stacking a soft magnetic layer 16 and a recording layer 17 successively on a substrate 15 made of glass, for example.

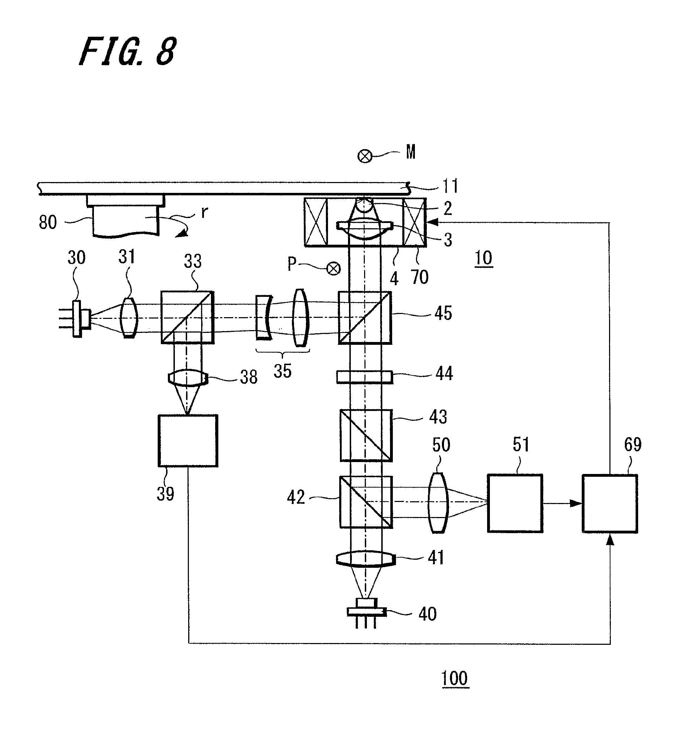

As described in detail later with reference to FIG. 8, as one example the optical system 67 includes a collimator lens (not shown), a beam splitter 68, and the like. The magnetic recording apparatus 100 also includes a positioning control apparatus 69 that carries out operations on the detection output supplied from the light detecting unit 66 to obtain the desired servo signals for the light-assisted magnetic head apparatus 10 (for example, various servo signals for gap control, tracking, and the like), and carries out control. If the light-assisted magnetic head apparatus 10 also includes a thin-film reproducing magnetic head in addition to the thin-film magnetic recording head, although not shown, such head element is connected to a reproduction signal circuit and magnetic signal reproduction operations are carried out.

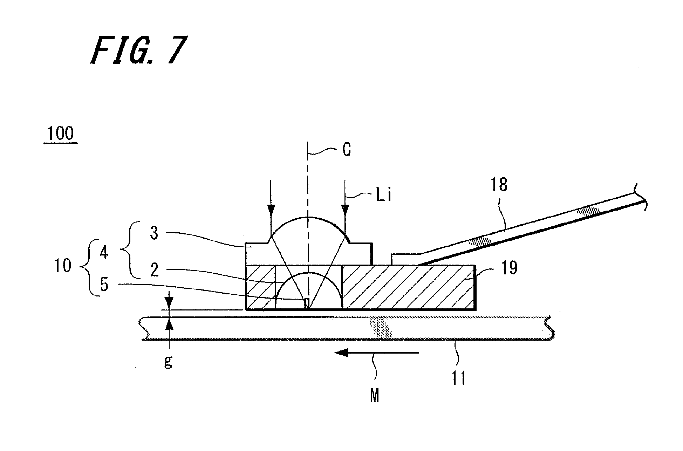

In a state where the magnetic recording medium 11 that is a magnetic disk, for example, has been mounted on the mounting portion 64, the mounting portion 64 is rotationally driven as shown by the arrow r by a driving unit 80 such as a spindle motor so that the magnetic recording medium 11 rotates in the direction of the arrow M. A control mechanism 70 driven by the control apparatus 69 can be formed with an air bearing slider described later with reference to FIG. 7, or by a biaxial actuator. The light-assisted magnetic head apparatus 10 according to an embodiment of the present invention that includes the focusing optical system 4 is mounted on the control mechanism 70 which is driven based on the tracking servo signals and the gap servo signals to move and adjust the focusing optical system 4 in the tracking direction and to move and adjust the focusing optical system 4 in the optical axis direction, that is, the gap direction.

In the magnetic recording apparatus 100 according to the present embodiment, the disk-shaped magnetic recording medium 11 is rotated, and laser light with a predetermined wavelength, for example, 400 nm, from the light source unit 62 is guided by the optical system 67 along the optical axis of the light-assisted magnetic head apparatus 10. As a result, the near-field light generated by the light-assisted magnetic head apparatus 10 is incident on the magnetic recording medium 11. The light-assisted magnetic head apparatus 10 includes the focusing optical system 4 having a two-group lens including the objective lens 3 and the hemispherical or hyper-hemispherical SIL 2. Accordingly, as described later, in the light-assisted magnetic head apparatus 10, the spot diameter can be reduced and the spot center can be disposed close to the main magnetic pole 21 less than 100 nm apart in particular by suitably arranging the main magnetic pole 21 (and the metal layer 29 thereupon) and the optical axis and suitably selecting the direction of electric field oscillation for the light incident through the focusing optical system 4.

While the spot is incident on the rotating magnetic recording medium 11, an information recording signal is supplied to the magnetic head coil of the thin-film magnetic head 5. Accordingly, a recording signal magnetic field is applied from the front tip of the main magnetic pole 21 of the thin-film magnetic head 5 onto the magnetic recording medium 11 to record a signal.

FIG. 7 is a side view, partially in cross section, of the light-assisted magnetic head apparatus 10 according to an embodiment of the present invention for a case where an air bearing slider is used as the control mechanism 70 for adjusting the tracking and gap. In FIG. 7, parts that correspond to those in FIG. 1 have been assigned the same reference numerals and duplicated description thereof is omitted. In this air bearing construction, the light-assisted magnetic head apparatus 10 is mounted on a slider 19 supported at the free end of a suspension 18. The gap between the light-assisted magnetic head apparatus 10 and the magnetic recording medium 11 is adjusted by the float height of the slider 19 that floats relative to movement or rotation of the magnetic recording medium 11 that faces the thin-film magnetic head 5.

In the magnetic recording apparatus 100 according to an embodiment of the present invention, "passive control" is carried out where the light-assisted magnetic head apparatus 10 is floated with movement or rotation of the magnetic recording medium 11. Alternatively, it is possible to carry out "active control" where control over the gap and tracking of the light-assisted magnetic head apparatus 10 is carried out by controlling a biaxial actuator or the like using the control apparatus 69 shown in FIG. 7.

FIG. 8 is a schematic diagram of one example of the magnetic recording apparatus 100 in which such active control is carried out. In this example, the wavelength of light used to assist the recording is different from the wavelength of light used to detect the gap. As shown in FIG. 8, the magnetic recording apparatus 100 includes a light source 30, and a collimating lens 31, a polarizing beam splitter 33, a beam expander 35, and a dichroic prism 45 that are disposed on the optical path of the light emitted from the light source 30. The dichroic prism 45 reflects light from the light source 30 and the focusing optical system 4 is disposed on the optical path of such reflected light. A light detecting unit 39 such as a photodiode is disposed on an optical path of return light that has been reflected by the polarizing beam splitter 33, with a lens 38 in between. The magnetic recording apparatus 100 further includes a collimating lens 41, a beam splitter 42, a polarizing beam splitter 43, a quarter-wave plate 44, and the dichroic prism 45 that are disposed on the light path of the light emitted from the other light source 40. The focusing optical system 4 is disposed on the optical path of the light transmitted through the dichroic prism 45. A light detecting unit 51 such as a photodiode is disposed on the light path of the return light reflected by the beam splitter 42, with a lens 50 in between.

The assist light emitted from the light source 30 is converted to a parallel beam by the collimating lens 31, is transmitted through the polarizing beam splitter 33, and the beam width is adjusted by the beam expander 35. The light is then reflected by the dichroic prism 45 to be incident on the focusing optical system 4, that is, the objective lens 3 and the SIL 2, mounted on the control mechanism 70, which is a biaxial actuator or the like.

The magnetic recording medium 11 is rotated as shown by the arrow r by the driving unit 80, such as a spindle motor. The arrow M shows the movement direction of the magnetic recording medium 11 relative to the SIL 2 of the focusing optical system 4. With the light-assisted magnetic head apparatus 10 according to an embodiment of the present invention, the assist light applied to the magnetic recording medium 11 is preferably linearly-polarized and disposed so that as shown by the arrow P, the direction of the electric field oscillations is parallel to the movement direction M of the magnetic recording medium 11.

Tracking can also be carried out using return light of such assist light. In such case, the return light reflected from the recording surface of the magnetic recording medium 11 passes through the SIL 2 and the objective lens 3 and is reflected by the dichroic prism 45, passes through the beam expander 35 and is then reflected by the polarizing beam splitter 33 and focused on the light detecting unit 39 by the lens 38. A tracking signal or the like is obtained at the light detecting unit 39. Based on such signal, a tracking control signal is generated at the control apparatus 69, and the control mechanism 70 such as a biaxial actuator that supports the focusing optical system 4 is driven using the signal.

On the other hand, the light from the light source 40 is emitted via the collimating lens 41, the beam splitter 42, the polarizing beam splitter 43, and the quarter-wave plate 44 onto the dichroic prism 45. In the dichroic prism 45, such light is combined with the light from the light source 30 and applied via the objective lens 3 and the SIL 2 onto the magnetic recording medium 11 as a beam spot for detecting the gap. The return light thereof reflected from the magnetic recording medium 11 passes through the dichroic prism 45 and the quarter-wave plate 44, and light that leaks from the polarizing beam splitter 43 is reflected by the beam splitter 42, passes through the lens 50, and is detected by the light detecting unit 51.

If the gap between the magnetic recording medium 11 and the SIL 2 is large and the light is almost totally reflected at the SIL end surface, the polarization of light may fluctuate at the SIL surface, and part of the light from the polarizing beam splitter 43 on the return path may leak. On the other hand, if the magnetic recording medium 11 and the SIL 2 are close and the near field light leaks so there is close to normal reflection, there will be little change in the polarization of light, resulting in a reduction in the amount of light that leaks from the polarizing beam splitter 43. The gap is detected using such difference, that is, the change in the amount of totally reflected return light.

Note that it is also possible to use a variety of other methods as the method of detecting the gap between the SIL 2 and the magnetic recording medium 11, such as a method that detects changes in electrostatic capacitance.

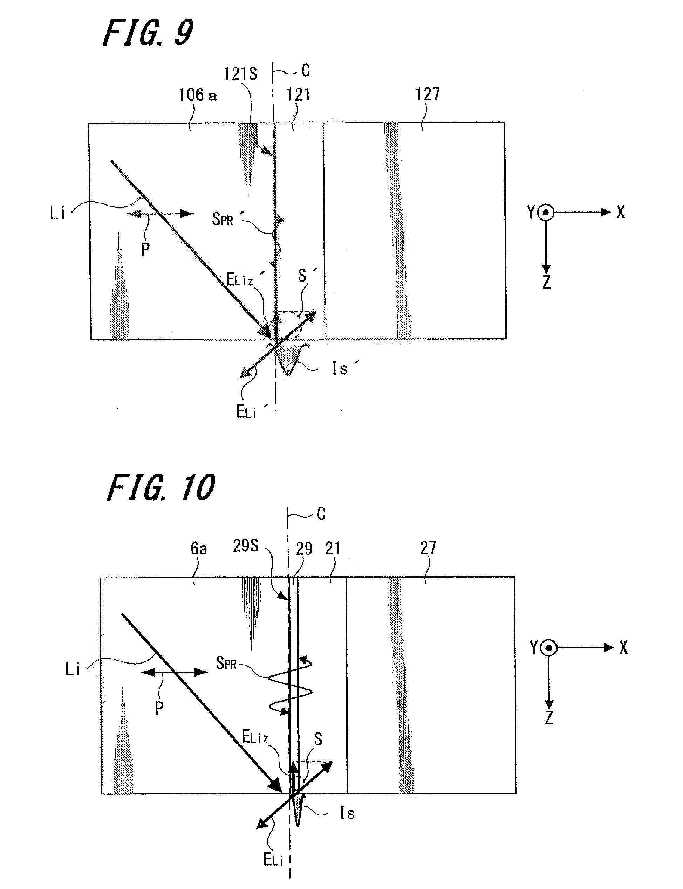

Next, the light irradiation state when the magnetic recording medium is irradiated with assist light using the magnetic recording apparatus 100 described above will be described in detail with reference to FIGS. 9 and 10.

FIG. 9 shows a light-assisted magnetic head apparatus according to a comparative example where a metal layer for causing surface plasmon resonance is not provided on the main magnetic pole, and FIG. 10 shows a light-assisted magnetic head apparatus according to an embodiment of the present invention.

In the comparative example shown in FIG. 9, a metal layer is not provided on a main magnetic pole 121, and a side surface 121S of the main magnetic pole 121, on which the light Li is incident, is disposed along the optical axis C. The direction in which the incident light Li propagates is designated as the Z axis, the direction of electric field oscillations P is designated as the X axis, that is, the direction of relative movement between the magnetic head apparatus and the magnetic recording medium or the length direction of the recording tracks on the magnetic recording medium.

The X direction in FIGS. 9 and 10 is the stacking direction of the thin-film magnetic head, and when forming the thin-film magnetic head, the recording head and reproduction head are disposed in series in this direction. Accordingly, to minimize the azimuth loss, it is preferable to carry out recording and reproduction while moving the magnetic recording medium in the X direction, and typically the X direction is set as the length direction of the recording tracks. The Y direction is set as the width direction of the recording tracks.

As shown in FIG. 9, when optical adjustment has been carried out so that the optical axis C of the incident light Li is along the side surface 121S of the main magnetic pole 121, the spot center will be disposed at a magnetic recording medium-side end surface along the side surface 121S of the main magnetic pole 121. The photoelectric field strength ELi' due to the incident light Li increases at the focal point on the base surface of the SIL and causes dielectric polarization of the adjoining main magnetic pole 121. The main magnetic pole 121 is formed of a magnetic metal such as an alloy of Co or Ni so that excited vibration of the free electrons occurs due to the incident photoelectric field ELi'.

At the interface between the metal and the dielectric material, vibration of the free electrons is excited by the incident photoelectric field. When the dielectric constants of the metal and dielectric material are expressed as $\varepsilon(\omega)$ and $\varepsilon_m$ respectively, and the conditions

$$\varepsilon(\omega) < 0$$

$$|\,\varepsilon(\omega)\,|\ >\ \varepsilon m$$

are satisfied, the free electron oscillations will propagate as plane waves along the interface and as evanescent waves that attenuate exponentially as the distance from the surface increases. Such oscillations of free electrons locally excited on that surface are referred to as "surface plasmon resonance" (SPR).

If the plane of polarization of the incident light Li, that is, the direction of electric field oscillations of the incident light is set as the X direction, out of the ends of the main magnetic pole 121, the dielectric polarization effect described above occurs at only the same side as the optical axis of the incident light Li. Accordingly, the photoelectric field strength at the end on the same side as the optical axis C of the incident light Li is amplified. As a result of such local charge concentration, a light spot S' is formed near the end of the main magnetic pole 121 on the same side as the optical axis C of the incident light Li. The intensity distribution of the light spot S' is schematically shown as Is'.

In this case, the Z component of the photoelectric field strength ELi' excites the surface plasmons SPR' at the surface of the main magnetic pole 121. Charges concentrate at the edge portion of the side surface 121S of the main magnetic pole 121 in a range that covers almost half of the thickness of the main magnetic pole 121. That is, in this case, the diameter of the spot S' is around half the thickness of the main magnetic pole 121 and the spot diameter is limited depending on the thickness of the main magnetic pole 121.

On the other hand, FIG. 10 illustrates the light irradiation state in the case of the light-assisted magnetic head apparatus according to an embodiment of the present invention. In FIG. 10, parts that correspond to those in FIG. 4B have been assigned the same reference numerals and duplicated description thereof is omitted.

A large number of free electrons are present in a typical metal and due to coulomb interaction, there are oscillations in the density of the free electrons. Such collective oscillations in the free electrons are called "plasmons" and propagate in a bulk as a plane wave. For the electromagnetic field at the two-dimensional interface where the dielectric material and metal are in contact, the wave number ksp may be as shown by Equation (1) below:

$$ksp\ =\ (\omega/c)\ \times\ \sqrt{\{\,[\,\varepsilon m\ \times\ \varepsilon(\omega)\,]\ /\ [\,\varepsilon m\ +\ \varepsilon(\omega)\,]\,\}}\ \cdots\ (1)$$

where $\varepsilon(\omega)$ is the dielectric constant of the metal and $\varepsilon m$ is the dielectric constant of the dielectric material.

In this case, when the conditions $\varepsilon(\omega) < 0$ and $|\,\varepsilon(\omega)\,| > \varepsilon m$ described earlier are satisfied, ksp will be a real number, and the surface plasmon resonance state (SPR state) described above will be obtained. Here, ksp is the surface plasmon resonant frequency.

For light with a wavelength of 650 nm, the dielectric constant of Au, Ag, and Co may be as follows: Au: -11.36 + 0.96i Ag: -18.12 + 0.68i Co: -13.84 + 20.68i

With Au and Ag, the imaginary part of the dielectric constant is so small as to be negligible, and since the condition $\varepsilon(\omega) < 0$ is satisfied, ksp may be a real number and the surface plasmon resonance described above may occur. On the other hand, since the imaginary part of the dielectric constant is large with Co, ksp may become an imaginary number and surface plasmon resonance may hardly occur.

Accordingly, Au, Ag, or alloy thereof may be used as the material of the metal layer provided according to an embodiment of the present invention on the light-incident side of the main magnetic pole. Note that the ratio of constituents, the types of additive materials and the like when Au alloy or Ag alloy is used may be set in a range where surface plasmon resonance occurs and the intended spot diameter and peak power can be obtained.

Similar to the example shown in FIG. 9, in the light-assisted magnetic head apparatus according to an embodiment of the invention shown in FIG. 10, when the incident light Li is linearly polarized light and the direction of electric field oscillations P is within the incident plane, the Z component ELiz of the incident photoelectric field strength ELi may contribute to excitation of the surface plasmons SPR at the interface between the metal layer 29 and the first optical block 6a that is a dielectric body. That is, when the metal layer 29 formed of such as Au or Ag that contributes to the surface plasmon resonance is provided, surface plasmons are generated more intensely and the oscillations of the free electrons on the plane are excited more intensely. In addition, the photoelectric field strength ELi is maximized near the focal plane, and dielectric polarization intensified at the end of the metal layer 29 also occurs due to an edge effect. The free electrons that contribute to the surface plasmon resonance are localized inside the metal layer 29, and in particular to a range of the skin depth (i.e., 10 nm to 20 nm) of the Au or Ag. Therefore, the near-field light spot S produced as a result of the local electric field oscillation becomes substantially equal to the film thickness of the metal layer 29. The intensity distribution of the light spot S is shown as Is. Compared to the intensity distribution Is' of the light spot S' shown in FIG. 9, the half width is narrow.

From the results described above, according to an embodiment of the present invention, the light incident on the focusing optical system is preferably linearly-polarized light and the direction of the electric field oscillations is preferably disposed in parallel to the direction of relative movement between the magnetic head and the magnetic recording medium so that surface plasmon resonance is efficiently caused. Further, it is preferable for the optical axis to be disposed along the light-incident side surface of the metal layer.

Note that if the optical axis is not disposed in the center of the metal layer in the Y direction and is shifted from the center and disposed, the spot may have two peaks. Thus, it may be preferable for the optical axis to be disposed in the center of the light-incident side surface of the metal layer within a range where one peak is obtained.

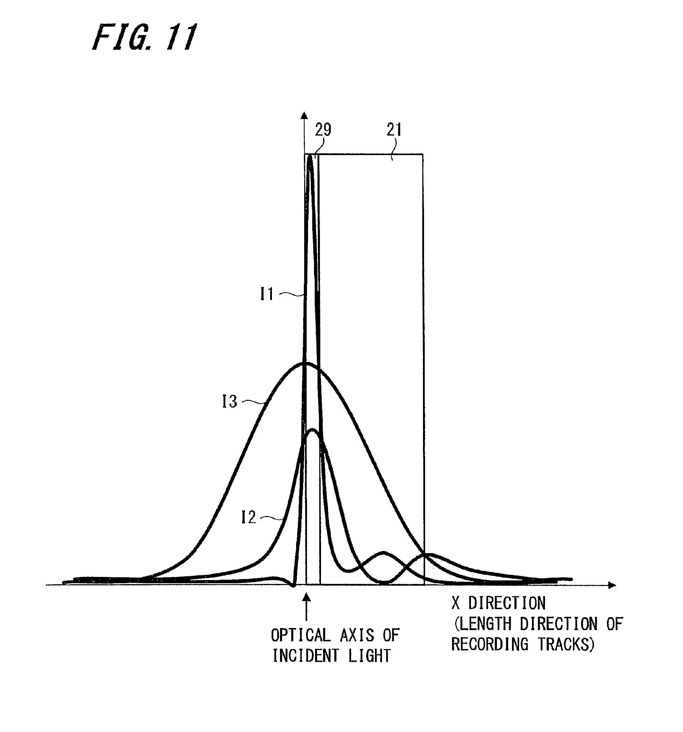

FIG. 11 is a schematic diagram showing the light intensity distribution of the spot when the X direction is set as the direction of electric field oscillations. The horizontal axis shows positions in the X direction, that is, in the length direction of the recording tracks and the vertical axis shows the light intensity (in arbitrary units). The distribution in the X direction is plotted from the center of the main magnetic pole 21 in the Y direction and shows the intensity at the surface of the magnetic recording medium. In FIG. 11, the solid line I1 shows the case according to an embodiment of the present invention shown in FIG. 10, the solid line I2 shows the comparative example shown in FIG. 9, and the solid line I3 shows the case of only an SIL is provided, that is, where a main magnetic pole is not provided. Note that the metal layer in the example shown by I1 is an Ag film and the material of the main magnetic pole 21 in the example shown by I2 is Co.

Conditions for the optical system are as follows. The numerical aperture of the objective lens is 0.75, the refractive index of the SIL is 1.92 for the wavelength of the incident light, the SIL material is S-LAH58 optical glass (Product name of Ohara Inc.), and the wavelength of the incident light is 400 nm. Note that the effective numerical aperture of the focusing optical system 4 including the objective lens 3 and the SIL 2 is 1.44.

In this example, the construction described above with reference to FIGS. 5A and 5B is as follows: the depth ld of the main magnetic pole 21 and the widths wm, wy of the main magnetic pole 21 and the yoke 25 in a direction perpendicular to the direction of relative movement between the light-assisted magnetic recording head and the magnetic recording medium are set so that ld = 3 $\mu$m, wm = 0.15 $\mu$m, and wy = 4 $\mu$m, respectively.

Also, the material of the main magnetic pole 21 is Co, the thickness thereof in the X direction is 140 nm, the material of the metal layer 29 is Ag, and the thickness thereof in the X direction is 10 nm.

Analysis was carried out according to FDTD (Finite Difference Time Domain). The distance between the SIL end surface and the surface of the magnetic recording medium is set to 20 nm.

In the case of the comparative example shown by the solid line I2, the spot diameter is 50 nm to 60 nm that is around half the thickness of the main magnetic pole and the peak power of the spot is around 70% compared to the example of a typical SIL shown by the solid line I3 that is not provided with a magnetic head.

On the other hand, with the embodiment according to the present invention, as shown by the solid line I1, since the metal layer is provided, the spot diameter is reduced, that is, miniaturized to 10 nm to 20 nm that is substantially the same as the thickness of the metal layer. Further, due to the electric field intensifying effect of the surface plasmon resonance, the peak power of the spot is intensified compared to a typical SIL. Note that when Au was used as the material of the metal layer, a similar intensity distribution was obtained where the peak power was high and the spot diameter was reduced to around the thickness of the metal layer.

From the results described above, according to an embodiment of the present invention, the thickness of the metal layer substantially corresponds to the spot diameter obtained. The spot diameter may only need to be able to record the smallest intended recording marks and therefore the thickness of the metal layer may be no greater than the length of the smallest recording mark.

On the other hand, as the minimum thickness, the metal layer may only need to be thick enough for surface plasmon resonance to occur, and is typically around 3 nm to 10 nm. Since there may be a larger energy loss for the surface plasmons when the thickness is below 1 nm, the thickness of the metal layer may need to be at least 1 nm, and should preferably be at least 3 nm.

As described earlier, according to an embodiment of the present invention, it is possible to closely dispose the light spot of the assist light and the main magnetic pole of the magnetic head used for recording, that is, it is possible to dispose the light spot on an end portion of the main magnetic pole.

Also according to an embodiment of the present invention, it is possible to miniaturize the light spot diameter, and in particular to realize a spot diameter of 50 nm or smaller and to form such minute spot on an end portion of the main magnetic pole.

Due to the two effects of closely disposing the light spot and the main magnetic pole and reducing the spot diameter, a large recording magnetic field gradient due to the light assist effect can be obtained. As a result, it is possible to reduce the recording mark length and to improve the recording density.

With the obtained large recording magnetic field gradient mentioned above, it is possible to record data on a recording medium with high magnetic anisotropic energy (Ku). As a result, it is possible to increase the recording density, and to simultaneously suppress thermomagnetic relaxation and thereby extend the life of the recorded data.

That is, according to an embodiment of the present invention, it is possible to provide a light-assisted magnetic head apparatus that realizes a high recording density in excess of 1 terabit per square inch that was difficult to realize with an existing magnetic recording/reproducing apparatus. By suitably selecting the material and thickness of the metal layer, it is possible to dispose a light spot with a spot diameter of an order of 10 nm at a distance of an order of 10 nm from the recording head magnetic pole. Thus, it is possible to simultaneously obtain a sufficient recording magnetic field and light spot intensity. Accordingly, since a magnetic recording medium with a high-coercivity recording film where recording might not be carried out by existing technology may be used, it is possible to reduce the recording domains to 10 nm or below and thereby realize an improved recording density.

Note that the present invention is not limited to the embodiments described above and can be subjected to a variety of modifications and changes without departing from the scope thereof. For example, in the light-assisted magnetic head apparatus and light-assisted magnetic recording medium according to an embodiment of the present invention, it is possible to allow a margin for the positions of the light axis and the metal layer on the main magnetic pole of the thin-film magnetic head within an optically adjustable range. For example, even if the optical axis is displaced from the center of the incident-side surface of the metal layer within a range of the margin for optical adjustments, it may be possible to closely dispose the peak position of the light spot with an order of 10 nm on the end portion of the main magnetic pole in the same way as when the light spot is disposed in the center.

On the other hand, when the optical axis is disposed on an end portion in the Y direction of the metal layer, a suitable photoelectric field energy distribution may not be obtained and the same effect as an embodiment of the present invention may not be obtained. The incident photoelectric field distribution may represent a Gaussian distribution near the focal plane. However, in order to have a monomodal peak at the end portion of the main magnetic pole, the peak or vicinity of the Gaussian distribution where the incident photoelectric field may be substantially constant may need to match the end of the metal layer. This is believed to be a range of around 1/3 to 1/4 of the spot diameter produced by the SIL.

That is, according to an embodiment of the present invention, the metal layer and the optical axis may be allowed to be disposed having a displacement within a range where there is only one peak in the photoelectric field energy distribution.

Further, in the light-assisted magnetic recording method according to an embodiment of the present invention, it is possible to use a different near-field light irradiating device such as a SIM (Solid Immersion Mirror) without using an SIL in the focusing optical system.

It should be understood by those skilled in the art that various modifications, combinations, sub-combinations and alterations may occur depending on design requirements and other factors insofar as they are within the scope of the appended claims or the equivalents thereof.

**Claims**

1. A light-assisted magnetic head apparatus comprising:

   a focusing optical system; and
   a thin-film magnetic head including a main magnetic pole,

   wherein the focusing optical system includes a hemispherical or hyper-hemispherical solid immersion lens, and
   wherein the thin-film magnetic head includes a metal layer that causes surface plasmon resonance on a light-incident side of the main magnetic pole.

2. A light-assisted magnetic head apparatus according to claim 1, wherein linearly polarized light is incident on the focusing optical system and a direction of electric field oscillations of the incident light is disposed along a direction of relative movement between the light-assisted magnetic head apparatus and a magnetic recording medium.

3. A light-assisted magnetic head apparatus according to claim 1 or 2,
   wherein the thin-film magnetic head is a single-pole magnetic head used for perpendicular magnetic recording,
   wherein the metal layer is provided on a side surface of the main magnetic pole at a leading end in a direction of relative movement between the light-assisted magnetic head apparatus and a magnetic recording medium, and
   wherein the metal layer is disposed along an optical axis of the focusing optical system.

4. A light-assisted magnetic head apparatus according to claim 3, wherein the optical axis is disposed at a center portion of the metal layer.

**5.** A light-assisted magnetic head apparatus according to one of the claims 1 to 4, wherein a material of the metal layer provided on the main magnetic pole is one of Au, Ag, Au alloy, and Ag alloy.

**6.** A light-assisted magnetic head apparatus according to one of the claims 1 to 5, wherein a thickness of the metal layer on the main magnetic pole is at least 1 nm and is no greater than a smallest recording mark length to be recorded on a magnetic recording medium.

**7.** A light-assisted magnetic head apparatus according to one of the claims 1 to 6, wherein the solid immersion lens includes a spherical portion forming a spherical part of the lens and an optical material portion facing a magnetic recording medium, and the thin-film magnetic head is formed on the optical material portion.

**8.** A light-assisted magnetic recording apparatus comprising:

a light source unit;
a magnetic recording medium mounting unit;
a thin-film magnetic head including a main magnetic pole;
a recording signal control unit; and
a focusing optical system that guides light from the light source unit to the thin-film magnetic head,

wherein the focusing optical system includes a hemispherical or hyper-hemispherical solid immersion lens, and
wherein the thin-film magnetic head includes a metal layer that causes surface plasmon resonance on a light-incident side of the main magnetic pole.

**9.** A light-assisted magnetic recording apparatus according to claim 8, wherein the thin-film magnetic head is mounted on an air bearing slider.

**10.** A light-assisted magnetic recording apparatus according to claim 8,
wherein the thin-film magnetic head is mounted on an actuator that carries out positioning in the direction of a normal to a surface of a magnetic recording medium, and
wherein return light from the magnetic recording medium through a near field is used to control a distance between the thin-film magnetic head and the magnetic recording medium.

**11.** A light-assisted magnetic recording method, comprising the steps of:

disposing a thin-film magnetic head at a focused spot position of a focusing optical system;
providing a metal layer that causes surface plasmon resonance on a main magnetic pole of the thin-film magnetic head; and
carrying out recording on a magnetic recording medium by applying near field light from a front end position where the metal layer of the main magnetic pole is provided.

FIG. 1

# FIG. 2

# FIG. 3

## FIG. 4A

## FIG. 4B

*FIG. 5A*

*FIG. 5B*

EP 2 040 254 A2

# FIG. 6

FIG. 7

# FIG. 8

## FIG. 9

## FIG. 10

*FIG. 11*

OPTICAL AXIS OF
INCIDENT LIGHT

X DIRECTION
(LENGTH DIRECTION OF
RECORDING TRACKS)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007246245 A
- JP 2006286119 A

- JP 2007227170 A